(19) Europäisches Patentamt European Patent Office Office européen des brevets

(11) **EP 4 037 428 B1**

(12) **EUROPEAN PATENT SPECIFICATION**

(45) Date of publication and mention
of the grant of the patent:
**16.07.2025 Bulletin 2025/29**

(21) Application number: **22151207.2**

(22) Date of filing: **12.01.2022**

(51) International Patent Classification (IPC):
*H04W 84/18* (2009.01)    *H04W 84/20* (2009.01)
*H04W 4/40* (2018.01)    *H04W 76/14* (2018.01)
*H04W 4/30* (2018.01)    *H04W 4/42* (2018.01)
*H04W 4/44* (2018.01)    *H04W 4/46* (2018.01)
*H04W 4/48* (2018.01)

(52) Cooperative Patent Classification (CPC):
**H04W 76/14;** H04W 4/40; H04W 36/033;
H04W 84/20; H04W 88/04

(54) **DEVICE TO NETWORK RELAY**

VORRICHTUNG ZU EINEM NETZWERKRELAIS

RELAIS DISPOSITIF VERS RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.02.2021  FI 20215109**

(43) Date of publication of application:
**03.08.2022  Bulletin 2022/31**

(73) Proprietor: **Nokia Technologies Oy
02610 Espoo (FI)**

(72) Inventors:
 • **Sabouri-Sichani, Faranaz
  9220 Aalborg (DK)**
 • **Yu, Ling
  02700 Kauniainen (FI)**
 • **Ji, Lianghai
  9220 Aalborg (DK)**
 • **Van Phan, Vinh
  90100 Oulu (FI)**

(74) Representative: **Kolster Oy Ab
Salmisaarenaukio 1
P.O. Box 204
00181 Helsinki (FI)**

(56) References cited:
 **EP-A1- 3 955 642    US-A1- 2015 282 142
 US-A1- 2015 365 994    US-A1- 2019 014 616**

**Description**

TECHNICAL FIELD

Various example embodiments relate to wireless communications.

BACKGROUND

Wireless communication systems are under constant development. One way to increase network coverage is to use so called device-to-network relay technology in which sidelink communication is used, for example to receive data at a device from the network relayed via another device or transmit data from a device to another device, which then relays the data to a network. US 2015/0282142 discloses a device-to-device communication cluster of a plurality of communication devices wherein one of the plurality of communication devices is a master and performs a network control signal gateway function for the cluster. When there is a need to change another device (second device) to be a master, a master change request is sent to the network, and if approved, when the second device takes over the master role, the second device informs the network thereof. US 2019/0014616 discloses different operational characteristics that may be used to determine a device that relays the data to a network. EP 3 955 642, having an earlier filing date but being published after filing date of EP 4037428, discloses a role management arrangement in which roles may be switched between a relay user equipment and a remote user equipment by the wireless network, which receives a measurement report based on which the wireless network may send a role switch command, or commands. US 2015/365994 discloses a solution in which device-to-device communication from UE1 to UE2 may be used to inform wireless network on a radio problem UE1 is having. For that purpose, UE1 may transmit its random access identifier C-RNTI, discontinuous reception configuration and timing information to UE2.

BRIEF DESCRIPTION

The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to an aspect there is provided an apparatus comprising means for performing: establishing to a serving wireless network a wireless connection with a relay context for the apparatus to act as a relay node to relay data between the serving wireless network and one or more second apparatuses using sidelink communication between the apparatus and the one or more second apparatuses, wherein the one or more second apparatuses using sidelink are acting as one or more remote nodes; determining, in response to preset criteria being fulfilled, that a role switch between the apparatus and a second apparatus amongst the one or more remote nodes is to take place; causing sending, in response to the determining, to the second apparatus a message comprising at least the relay context for the second apparatus to start to act as the relay node; stopping, in response to the causing sending, acting as the relay node and starting to act as a remote node and use the sidelink communication to the second apparatus for data transmission between the apparatus and the serving wireless network.

In an embodiment, the means are further configured to perform: determining, prior to establishing the relay context, a consolidated capability information based on capability information of the apparatus and capability information of at least the second apparatus; and using the consolidated capability information as the capability information of the apparatus when establishing the wireless connection with the relay context.

According to an aspect there is provided an apparatus comprising means for performing: acting as a remote node by using sidelink communication to a first apparatus for data transmissions between the apparatus and a serving wireless network, wherein the first apparatus is acting as a relay node; determining, in response to receiving from the first apparatus a message comprising at least a relay context for data transmission over a wireless connection to the serving wireless network, that a role switch between the apparatus and the first apparatus is to take place; stopping, in response to the determining, acting as the remote node and starting to act as a relay node using the received relay context to the serving wireless network for data transmission and to relay data between one or more remote nodes and the serving wireless network using the sidelink communication, wherein the one or more remote nodes comprise at least the first apparatus.

In an embodiment, the means are further configured to perform, when performing the acting as the remote node: performing radio resource measurements according to a received configuration; and causing sending measurement reports to the first apparatus.

In embodiments, the means are further configured to perform, when performing the acting as the relay node: determining, in response to preset criteria being fulfilled, that a role switch between the apparatus and a second apparatus amongst the one or more remote nodes is to take place; causing sending, in response to the determining, to the second apparatus at least the relay context for the second apparatus to start to act as the relay node; stopping, in response to the causing sending, acting as the relay node and starting to act as a remote node and use the sidelink communication to the second apparatus for data transmission between the apparatus and the serving wireless network.

In embodiments, the means are further configured to perform, when performing the acting as the relay node: receiving from the serving wireless network a radio resource measurement configuration; and causing sending the radio resource measurement configuration to the one or more remote nodes.

In embodiments, the means are further configured to perform, when performing the acting as the relay node: performing radio resource measurements according to the received configuration; receiving measurements reports from the remote nodes; determining a consolidated measurement report using own radio resource measurement results and received measurement reports; and causing sending the consolidated measurement report to the wireless network as a radio resource measurement report of the apparatus.

In embodiments, the means are further configured to perform, when performing the acting as the relay node: causing requesting measurement reports from the one or more remote nodes.

In embodiments, the preset criteria comprises one or more of following: radio channel quality between the second apparatus and a serving access node in the serving wireless network is better than channel quality between the apparatus and the serving access node; and/or quality of sidelink between the second apparatus and other one or more second apparatuses is better than quality of sidelink between the apparatus and the other one or more second apparatuses; and/or quality has been better for a predetermined time; and/or handover to a target access node in the serving wireless network is triggered based on measurements from a second apparatus on the target access node.

In embodiments, the means are further configured to perform, when performing the acting as the relay node: processing sidelink resource requests received by the apparatus from the remote nodes to a resource request of the apparatus and causing sending the resource request to the serving wireless network; and/or processing sidelink information messages received by the apparatus from the remote nodes to a sidelink information message of the apparatus and causing sending the message to the serving wireless network; and/or processing assistance information messages received by the apparatus from the remote nodes to an assistance information message of the apparatus and causing sending the message to the serving wireless network.

In embodiments the means are further configured to perform: causing sending, in response to receiving from an enquiring apparatus over the sidelink a message enquiring capabilities, capability information at least to the enquiring apparatus.

According to an aspect there is provided a system comprising: at least a serving wireless network; at least one device group comprising at least a first apparatus and a second apparatus that are capable to communicate over a wireless connection with a serving wireless network and over sidelinks with each other and configured to act as a relay node and as a remote node, wherein per a device group, one of the apparatuses acts as a relay node for the device group and other apparatuses act as remote nodes, the apparatuses comprising, per an apparatus at least one processor; and at least one memory including computer program code, the at least one memory and computer program code configured to, with the at least one processor, cause when the apparatus is acting as the relay node, the apparatus at least to perform: using a relay context to communicate with the serving wireless network as a context apparatus with which the relay context has been established; determining, in response to preset criteria being fulfilled, that a role switch between the relay node and one of the remote nodes is to take place; causing, in response to the determining, forwarding at least the relay context to the one of the remote nodes and starting to act as a remote node; and when the apparatus is acting as the remote node, the apparatus at least to perform: using a sidelink and the relay node for data transmission to and from the serving wireless network; determining, in response to receiving at least the relay context from the relay node, that a role switch from the remote node to relay node is to take place; causing, in response to the determining, to act as the relay node using the received relay context to communicate with the serving wireless network as the context apparatus; wherein the serving wireless network is configured to communicate with the context apparatus using the relay context.

According to an aspect there is provided a method for an apparatus, the method, when performed by the apparatus, comprising: establishing to a serving wireless network a wireless connection with a relay context for the apparatus to act as a relay node to relay data between the serving wireless network and one or more second apparatuses using sidelink communication between the apparatus and the one or more second apparatuses, wherein the one or more second apparatuses using sidelink are acting as one or more remote nodes; determining, in response to preset criteria being fulfilled, that a role switch between the apparatus and a second apparatus amongst the one or more remote nodes is to take place; causing sending, in response to the determining, to the second apparatus a message comprising at least the relay context for the second apparatus to start to act as the relay node; stopping, in response to the causing sending, acting as the relay node and starting to act as a remote node and use the sidelink communication to the second apparatus for data transmission between the apparatus and the serving wireless network.

According to an aspect there is provided a method for an apparatus, the method, when performed by the apparatus, comprising: acting as a remote node by using sidelink communication to a first apparatus for data transmissions between the apparatus and a serving wireless network, wherein the first apparatus is acting as a relay node; determining, in response to receiving from the first apparatus a message comprising at least a relay context for data transmission over a wireless connection to the serving wireless network, that a role switch between the apparatus and the first apparatus is to take place; stopping, in response to the determining, acting as the remote node and starting to act as a relay node using the received relay context to the serving wireless network for data transmission and to relay data between one or more remote nodes and the serving wireless network using the sidelink communication, wherein the one or more remote nodes comprise at least the first apparatus.

According to an aspect there is provided a computer program comprising instructions which, when the program is executed by an apparatus, cause the apparatus to carry out at least one of a first process or a second process, wherein the first process comprises at least: acting as a relay node to relay data between a serving wireless network and one or more second apparatuses using sidelink communication between the apparatus and the one or more second apparatuses, wherein the one or more second apparatuses using sidelink are acting as one or more remote nodes; using a relay context to communicate with the serving wireless network; determining, in response to preset criteria being fulfilled, that a role switch between the relay node and one of the remote nodes is to take place; causing, in response to the determining, forwarding at least the relay context to the one of the remote nodes and starting to act as a remote node; wherein the second process comprises at least: acting as a remote node by using sidelink communication to a first apparatus for data transmissions between the apparatus and the serving wireless network, wherein the first apparatus is acting as a relay node; determining, in response to receiving from the first apparatus a message comprising at least the relay context, that a role switch between the apparatus and the first apparatus is to take place; stopping, in response to the determining, acting as the remote node and starting to act as a relay node using the received relay context to the serving wireless network.

In an embodiment the computer program comprising instructions which, when the program is executed by an apparatus, cause the apparatus to carry out at least: acting as a relay node to relay data between a serving wireless network and one or more second apparatuses using sidelink communication between the apparatus and the one or more second apparatuses, wherein the one or more second apparatuses using sidelink are acting as one or more remote nodes; using a relay context to communicate with the serving wireless network; determining, in response to preset criteria being fulfilled, that a role switch between the relay node and one of the remote nodes is to take place; causing, in response to the determining, forwarding at least the relay context to the one of the remote nodes and starting to act as a remote node.

In an embodiment the computer program comprising instructions which, when the program is executed by an apparatus, cause the apparatus to carry out at least: acting as a remote node by using sidelink communication to a first apparatus for data transmissions between the apparatus and the serving wireless network, wherein the first apparatus is acting as a relay node; determining, in response to receiving from the first apparatus a message comprising at least the relay context, that a role switch between the apparatus and the first apparatus is to take place; stopping, in response to the determining, acting as the remote node and starting to act as a relay node using the received relay context to the serving wireless network.

In an embodiment, the computer program comprising instructions which, when the program is executed by an apparatus, cause the apparatus to carry out at least either a first process or a second process, wherein the first process comprises at least: acting as a relay node to relay data between a serving wireless network and one or more second apparatuses using sidelink communication between the apparatus and the one or more second apparatuses, wherein the one or more second apparatuses using sidelink are acting as one or more remote nodes; using a relay context to communicate with the serving wireless network; determining, in response to preset criteria being fulfilled, that a role switch between the relay node and one of the remote nodes is to take place; causing, in response to the determining, forwarding at least the relay context to the one of the remote nodes and starting to act as a remote node; wherein the second process comprises at least: acting as a remote node by using sidelink communication to a first apparatus for data transmissions between the apparatus and the serving wireless network, wherein the first apparatus is acting as a relay node; determining, in response to receiving from the first apparatus a message comprising at least the relay context, that a role switch between the apparatus and the first apparatus is to take place; stopping, in response to the determining, acting as the remote node and starting to act as a relay node using the received relay context to the serving wireless network.

## BRIEF DESCRIPTION OF DRAWINGS

Embodiments are described below, by way of example only, with reference to the accompanying drawings, in which

Figure 1 illustrates an exemplified wireless communication system;
Figure 2 illustrates an exemplified sidelink usage situation;
Figures 3 to 8 are flow charts illustrating different examples of functionalities
Figures 9 to 11 illustrate different examples of information exchange; and
Figure 12 is a schematic block diagram.

## DETAILED DESCRIPTION OF SOME EMBODIMENTS

The following embodiments are examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the structural elements are not restricted by the terms. The terms are used merely for the purpose of distinguishing an element from other elements. For example, a first element could be termed a second element, and similarly, a second element could be also termed a first element without departing from the scope of the present disclosure.

Embodiments and examples described herein may be implemented in any communications system comprising wireless connection(s). In the following, different exemplifying embodiments will be described using, as an example of an access architecture to which the embodiments may be applied, a radio access architecture based on new radio (NR, 5G) or long term evolution advanced (LTE Advanced, LTE-A), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), beyond 5G, wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

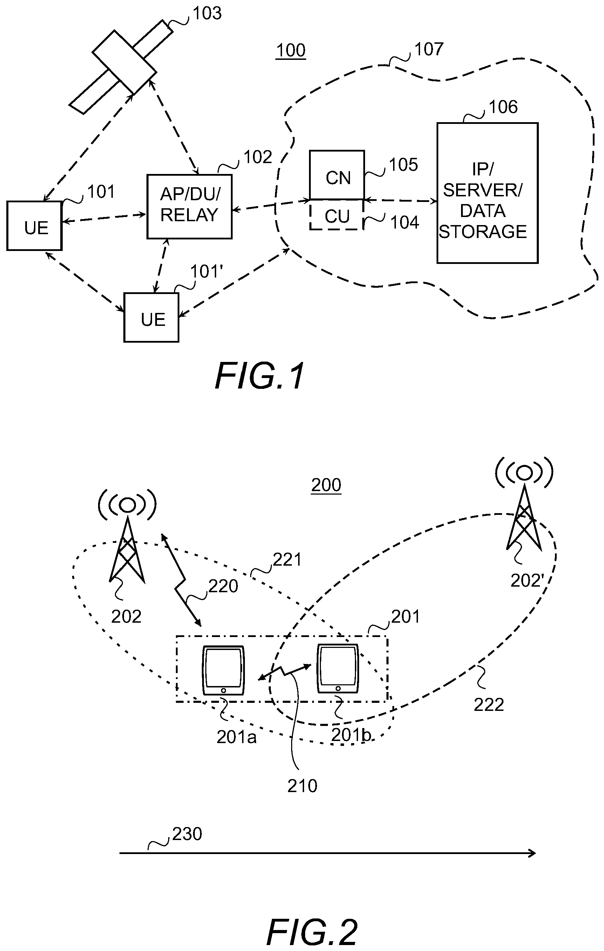

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

The example of Figure 1 shows a part of an exemplifying radio access network.

Figure 1 shows user devices 101 and 101' configured to be in a wireless connection on one or more communication channels in a cell with an access node (such as (e/g)NodeB) 102 providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point (AP) etc. entity suitable for such a usage.

A communications system 100 typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 105 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), access and mobility management function (AMF), etc.

The user device (also called UE, user equipment, user terminal, terminal device, etc.) illustrates one type of an apparatus to which resources on the air interface are allocated and assigned, and thus any feature described herein with a user device may be implemented with a corresponding apparatus.

The user device typically refers to a portable computing device that includes wireless mobile communication devices operating with a subscription entity, for example a subscriber identification module (SIM), including, but not limited to, the following types of wireless devices: a mobile station (mobile phone), smartphone, personal digital assistant (PDA), handset, device using a wireless modem (alarm or measurement device, etc.), laptop and/or touch screen computer, tablet, game console, notebook, wearable device, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. The user device may also utilise cloud. In some applications, a user device may comprise a small portable device with radio parts (such as a watch, earphones or eyeglasses) and the computation is carried out in the cloud. The user device is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors micro-controllers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 1) may be implemented.

5G enables using multiple input - multiple output (MIMO) antennas, many more base stations or nodes or corresponding network devices than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integradable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 106, or utilise services provided by them. The communication network may also be able to support the usage of cloud services, for example at least part of core network operations may be carried out as a cloud service (this is depicted in Figure 1 by "cloud" 107). The communication system may also comprise a central control entity, or a like, providing facilities for networks of different operators to cooperate for example in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloud RAN architecture enables RAN real time functions being carried out at the RAN side (in a distributed unit, DU 102) and non-real time functions being carried out in a centralized manner (in a centralized unit, CU 104).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite 103 in the mega-constellation may cover several satellite-enabled network entities that create on-ground cells. The on-ground cells may be created through an on-ground relay node 102 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as relay nodes, for example distributed unit (DU) parts of one or more integrated access and backhaul (IAB) nodes, or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

One way to extend network coverage, for example in 3G, 4G, 5G and beyond 5G, is to use a concept called a sidelink based "user equipment to network" (UE-to-NW, device-to-network). The concept may be used, for example, in public safety services and vehicle-to-everything (V2X) services. The vehicle-to-everything services includes vehicle-to-vehicle (V2V), vehicle-to-pedestrian (V2P), and vehicle-to-infrastructure (V2I), for example.

Figure 2 provides a highly simplified example of the sidelink based "user equipment to network" relay concept in a situation in which user devices are mobile and moving.

Referring to Figure 2, a device group 201 comprises two or more devices 201a, 201b, i.e. a plurality of devices, that are configured to communicate with each other using sidelink communication 210 (direct communication, machine type communications), and at least two of the plurality of devices are configured to support relay functionality and are capable to have a wireless connection 220 to a wireless network, in the example of the relay concept 200 one device in the device group 201 at a time. The wireless network is provided by means of base stations 202, 202' (gNBs, access nodes) via corresponding cells 221, 222, as described above with Figure 1. Herein, a device 201a having the wireless connection 220 is called a relay node and the other devices 202b in the group are called remote nodes. In 5G, at least in V2X services, the interface for the sidelink 210 is called PC5 and the interface 220 for the wireless connection to the serving wireless network (in the illustrated example to a base station) is called Uu interface.

The device group 201 may comprise devices in a vehicle, for example one or more devices fixedly mounted, removably inserted to the vehicle, possibly being capable to have a wireless connection, and/or one or more devices that may be user-carried devices, such as smart phones, smart wearables etc. that are in the vehicle when the user is in the vehicle. The device group 201 may comprise a group of vehicles, or the device group 201 may be a wagon fleet with many wagons, traveling as a group. The devices in the device group may be devices of one owner, for example, or belong to one domain, for example to a public safety department or a railway operator, or they may have different owners and/or belong to different domains, as long as the devices in the device group can share information using sidelink.

In the illustrated example of Figure 2, the device group 201 is moving (traveling). In the time illustrated in Figure 2, the first device 201a is the relay node, locating in cell 221 and being served by the base station 202, and the second device 201b is the remote node, locating in an area in which cells 221, 222 overlap. Assuming that the device group is moving from left to right (arrow 230), it may be that when the device group entered the cell 221 the second device 201b was the relay node and the first device 201a the remote node, but while moving, the roles were switched (intra-gNB role switching). When the movement continues, at some time it may be that a handover from the base station 202 (cell 221) to the base station 202' (cell 222) takes place, and the roles may also again be switched (inter-gNB role switching).

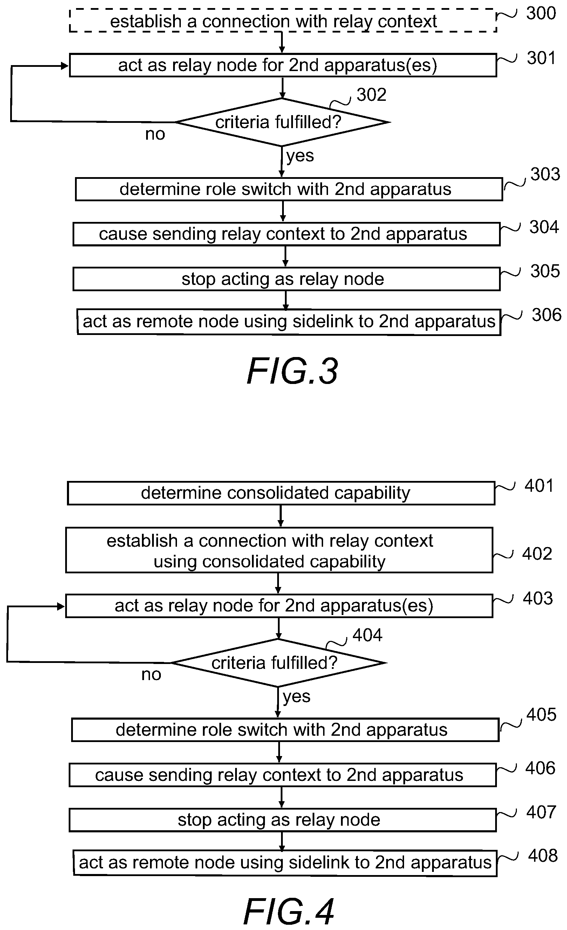

In below examples of Figures 3 to 8, devices in the device group that are configured to switch roles, i.e. switch from a relay node to a remote node, or vice versa, are called apparatuses, and the Figures 3 to 8 disclose different example functionalities of an apparatus.

Referring to Figure 3, it may be that the apparatus establishes (block 300) a wireless connection with a relay context to a serving network prior to acting (block 301) as a relay node for one or more second apparatuses (apparatuses that role switch candidates in the device group the apparatus is acting as a relay node). Naturally the apparatus is acting (block 301) as relay node also for possible devices in the device group that are not role switch candidates. The relay context comprises the configuration for acting as a relay node. However, it may be that another apparatus has already established the wireless connection and therefore the apparatus may omit block 300, illustrated as optional in Figure 3 by the use of dashed line.

When acting as the relay node, the apparatus checks in block 302, whether preset criteria has been fulfilled. If not (block 302: no), the apparatus continues to act as the relay node, and check the fulfillment of the criteria. For example, preset criteria may include that a second apparatus has better radio channel quality towards the serving wireless network, for example based on radio resource measurements, than the apparatus acting as the relay node, or that a second apparatus has had for a predefined time a better radio channel quality towards the serving wireless network than the apparatus acting as the relay node. The predefined time may be monitored, for example, by one or more additional timers. The use of the predefined time enables to avoid back and forth role switching when wireless qualities may be close to equal at most times. Further examples include that a second apparatus has (or has had for a predefined time) better joint quality, i.e. a combination of the radio channel quality towards the serving wireless network and sidelink quality towards other devices/apparatuses in the device group. Further examples of criteria, or parameters for criteria include capacities available in different sidelink communications, hardware, for example transceivers, and/or battery capacity. For example, if the apparatus has a vehicles capacity, for example battery capacity of a car, that is better than capacity of the second apparatus, the criteria may be fulfilled only when the difference between the radio channel quality or joint quality of the second apparatus and corresponding quality of the apparatus exceeds a preset limit. Other criteria, for example relating to power saving and/or load balancing, may be used as well. For example, the criteria may be preset with aim to optimize power saving and/or load balancing, so that the apparatus and one or more of the other apparatuses in the device group may be able to stay connected with the wireless network with best possible wireless connection and/or as long as possible.

If the criteria is fulfilled (block 302: yes), the apparatus determines in block 303 that a role switch with the second apparatus (a role change between the apparatus and the second apparatus) is to take place, and there sending the relay context to the second apparatus is caused in block 304. Since the relay context comprises, for example, user identity used towards the wireless network, assigned by the network to the apparatus, the role switch is transparent to the wireless network. In other words, the wireless network assumes to communicate with the apparatus, and uses the same subscription, for example, even though the communication continues with the second apparatus. Further, the apparatus stops in block 305 acting as the relay node and starts to act in block 306 as a remote node, using sidelink communication to the second apparatus.

Figure 4 illustrates another example functionality of an apparatus. In the illustrated example of Figure 4, the apparatuses in the device group are configured to use a consolidated capability (consolidated user device capability) as the capability of the apparatus towards the wireless network.

Referring to Figure 4, the apparatus determines in block 401 a consolidated capability. In some implementations, the determining may include reporting user device capability of the apparatus to another apparatus (device) and receiving the consolidated capability from said apparatus (device). The determining may include that at least all apparatuses within the device group are communicating, using the sidelink communication, user device capabilities to each other, for example when the device group is established, and/or the apparatus may request from one or more of the other apparatuses their user device capabilities, and to use its own capabilities and received capabilities to determine the consolidated capability. The capability may include wireless connection related capabilities and/or sidelink communication related capabilities. The consolidated capability may be based on least capability values, for example for supported bands/bandwidths, maximum transmission power, number of aggregated downlink/uplink carriers, etc. By doing so, any apparatus can take the relay node role without updating capabilities toward the wireless network. In other implementations the consolidated capability may the capability set of the least capable apparatus for certain capabilities, like the supported bands/bandwidths, or the consolidated capability may be based on capability values between the least capable apparatus and the most capable apparatus for the capability in question, or correspond to capabilities of an apparatus whose capability is between the least capable apparatus and the most capable apparatus. When a consolidated capability is determined for the device group, the consolidated capability is at most the capability of the apparatus which will be the first apparatus to act as a relay node.

When the consolidated capability is determined (block 401) in the example of Figure 4, the apparatus establishes in block 402 a wireless connection to the wireless network with a relay context using the consolidated capability. The blocks 403 to 408 corresponds to blocks 302 to 306 in Figure 3, and their description is not repeated herein.

In an implementation, an apparatus not able to provide the consolidated capability, is treated as a device configured to act as a remote node, not as a relay node, and hence it will not be a role switch candidate. In another implementation, such an apparatus, acting first as a remote node, will be a role switch candidate (candidate apparatus) even though it is not able to provide the consolidated capability currently in use (determined in block 401), and the candidate apparatus is configured to update the consolidated capability to the network, should it switch the role from the remote node to the relay node.

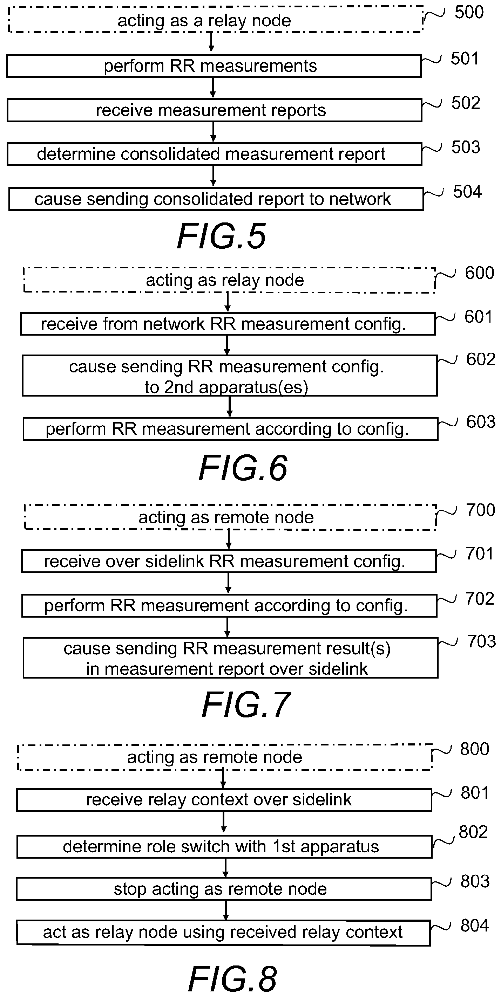

Figures 5 to 8 illustrate different examples of functionalities of an apparatus, the role of the apparatus at least atthe beginning of a corresponding example being defined by a block in dot-and-dash line.

Referring to Figure 5, when the apparatus is acting as a relay node (block 500), it performs in block 501 radio resource measurements on a serving cell and on neighbouring cells to determine corresponding radio channel qualities. Further, the apparatus receives in block 502 from apparatuses acting as remote nodes, corresponding measurement reports, and using its own measurement results and the received measurement reports, determines in block 503 a consolidated measurement report, sending of which to the wireless network is caused in block 504. In other words, the consolidated measurement report is sent to the wireless network as a radio resource measurement report from the apparatus. The consolidated measurement report may contain, for example per a serving cell, the highest reference signal received power level amongst own measurement results and results in the received reports. In another implementation, own measurement results are used in the consolidated measurement report unless a difference between a result in a received report and own result exceed a preset threshold, in which case the best result, for example the highest reference signal received power level, will be in the consolidated measurement report.

Referring to Figure 6, when the apparatus is acting as a relay node (block 600), or when the apparatus is registering to the wireless network, the apparatus receives in block 601 a radio resource measurement configuration. Sending the received radio resource measurement configuration, or configuration based on the received radio resource measurement configuration, at least to apparatuses (second apparatuses) that are acting as remote nodes using sidelink communication is caused in block 602. For example, the apparatus may be configured to add to the configuration received in block 601 one or more measurement events and/or reporting events, including one or more events relating to reporting quality of the sidelink, before causing sending the configuration in block 602. Further, the apparatus performs radio resource measurements, for example as described above with Figure 5, according to the received radio resource measurement configuration.

Referring to Figure 7, when the apparatus is acting as a remote node (block 700), or when a first apparatus registers to the wireless network, the apparatus receives in block 701 a radio resource measurement configuration from the first apparatus in sidelink communication. The apparatus performs in block 702 radio resource measurements according to the received radio resource measurement configuration, and sending, using the sidelink communication, the radio resource measurement results in a measurement report to the first apparatus acting as the relay node.

Thanks to the functionalities described with Figures 6 and 7, all apparatuses perform the radio resource measurements using same radio resource measurement configuration, and hence, when roles are switched, continue to appear to the wireless network as the same apparatus despite the role change. Therefore there is no need to the wireless network to re-send the radio resource measurement configuration when the roles are switched.

It should be appreciated that measurements and reporting may be performed a plurality of times, according to the configuration currently used even though the repeating is not illustrated in Figures 5 to 7. Further, the reporting and/or causing sending a measurement report may be performed periodically and/or when a trigger event is detected. A non-limiting lists of trigger events include a change in measured quality of the received signal from a serving or neighbouring cell exceeding a threshold given in the configuration, a neighbouring cell providing better radio channel quality to the apparatus than a serving cell to the apparatus, and a neighbouring cell providing better radio channel quality to an apparatus acting as a remote node than a service cell to the apparatus acting as the relay node (better quality may include a threshold).

Further, it should be appreciated that the apparatuses may be configured to further cause sending of measurement reports to all apparatuses in the device group. In other words, the apparatus acting as a relay node may be configured to send its measurement results to the apparatuses acting as remote nodes, and/or the apparatuses acting as the remote nodes may be configured to send measurement reports also to other apparatuses acting as the remote node. For example, group casting may be used for distributing measurement reports amongst apparatuses in the devise group.

Referring to Figure 8, when the apparatus is acting as a remote node (block 800), and receives the relay context from the first apparatus in sidelink communication, the apparatus determines in block 801 that a role switch with the first apparatus (a role change between the apparatus and the first apparatus) is to take place. Therefore the apparatus stops in block 803 acting as the remote node and starts to act in block 804 as a relay node, using the received relay context. (The apparatus may go to block 302 in Figure 3 or to block 403 in Figure 4, and perform functionalities of Figures 5 and 6 when acting as the relay node.) As explained above, since the relay context comprises, for example, the user identity assigned by the wireless network, the role switch is transparent to the wireless network. In other words, the wireless network assumes to communicate with the first apparatus, and uses the same subscription, for example, even though the communication continues with the (second) apparatus. Since the subscription of the first apparatus is used, the second apparatus may be an apparatus having no subscription, or having a subscription not usable in the wireless network, for example because roaming is not allowed, and yet it can be used for relaying.

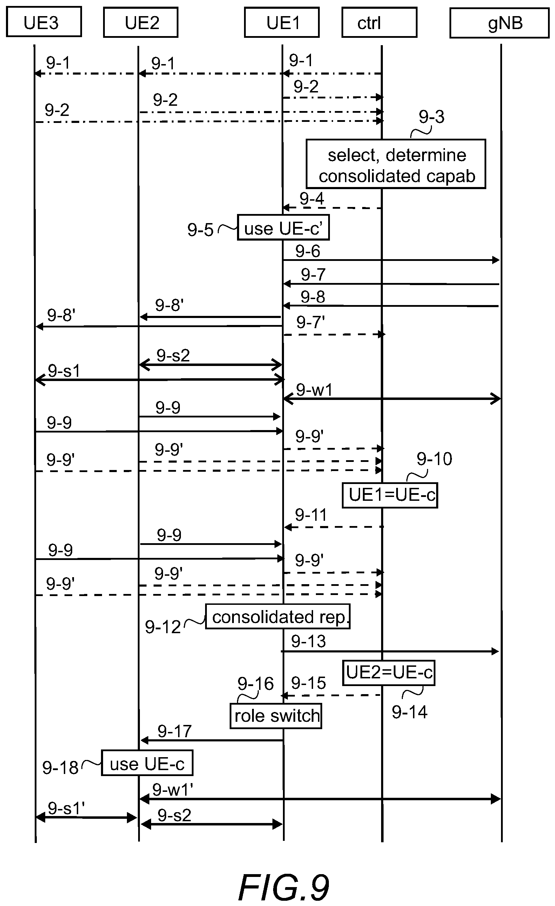

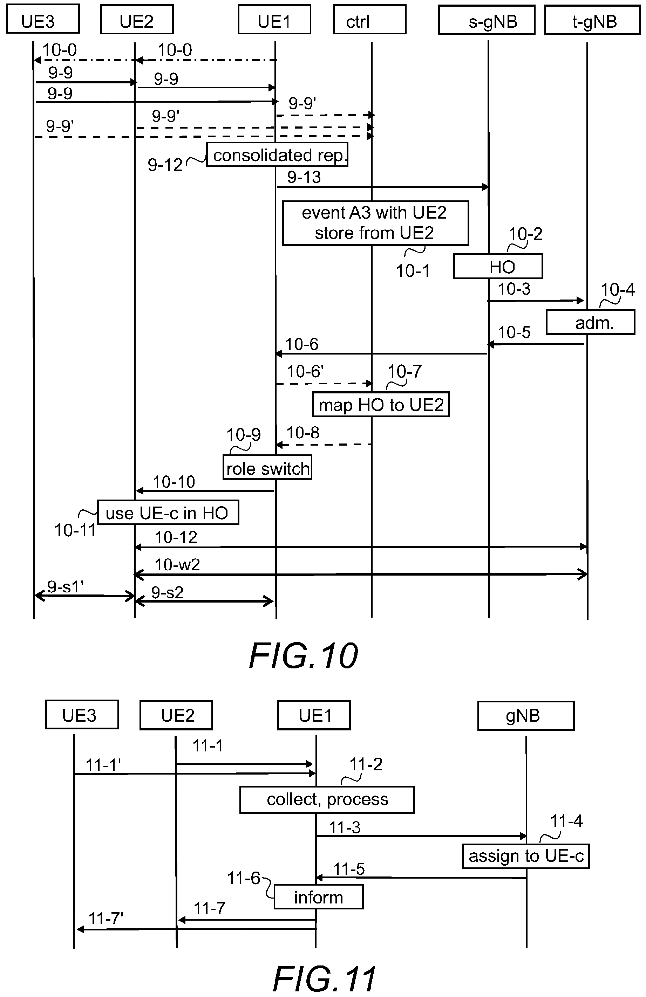

Figures 9 and 10 illustrate examples of information exchange when the device group comprises three apparatuses UE1, UE2, UE3 and a device (apparatus) comprising a control entity, ctrl (multi-UE controller), called below simply a controlling entity. Further, in the illustrated examples of Figures 9 and 10, the information exchange within the device group uses sidelink. It is a straightforward solution for one skilled in the art to implement the principles described with Figures 9 and 10 to implementations in which there is no separate device comprising the controlling entity but the apparatus acting as a relay node performs the controlling entity functionality and/or in which implementations the relaying related information, for example measurement reports and capability reports, is shared between apparatuses regardless of their role (for example UE3 may receive messages 9-2 and/or messages 9-9 from UE1 and UE2).

Referring to Figure 9, in the illustrated information exchange it is assumed that the apparatuses form a first time a device group under the control of the controlling entity. Therefore, in the illustrated example the controlling entity broadcast (message 9-1), for example, a request for capability information to internally collect capabilities of the apparatuses. Instead of broadcast other ways, such as point-to-multipoint or point-to point communication may be used. In the illustrated example, the apparatuses respond, per an apparatus, by sending from the apparatus capability information of the apparatus (messages 9-2 to the controlling entity. It should be appreciated that the capability information collection may also be triggered in response to an apparatus joining or leaving the device group, or any of the apparatuses requesting capability information, or updated capability information, or periodically (in which case it may be sent automatically, without any specific request). In other implementations the capability information may be sent also to other apparatuses in the device group and/or to an apparatus requesting capability information from other apparatuses in the group. In one implementation, the apparatuses are configured to be able to request capability information from other devices when acting as a relay node, not when acting as a remote node. It is also possible that the base station gNB (representing a serving access node) sends a message enquiring capability information to an apparatus in the device group, which then triggers collecting the capability information. The capability information may comprise, as described with Figure 4, wireless connection related capabilities and/or sidelink related capabilities. The controlling entity then determines in block 9-3 the consolidated capabilities, for example as described above with block 401.

In the illustrated example, the controlling entity is configured to select in block 9-3 the apparatus having the best wireless connection related capabilities to be, at least initially, the apparatus acting as the relay node. In the illustrated example UE1 is selected to have the relay node role as an initial relay node. However, it should be appreciated that any other selection criteria may be used, or the controlling entity may be configured to use always the same apparatus, for example apparatus mounted to a vehicle to be an initial relay node.

In implementations in which there is no separate controlling entity, the apparatuses may be configured with same rules (criteria) to determine, whether the apparatus is the one that will act as the (initial) relay node. Depending on an implementation, an apparatus may determine the consolidated capability in response to determining that it is the one that will act as the (initial) relay node, or in implementations, in which all apparatuses collect capability information, an apparatus may determine the consolidated capability in any case, even when it knows it will be acting as a remote node. If apparatuses determine the consolidated capability in any case, sending during role switch to the new relay node the consolidated capability with the relay context may be omitted.

In the illustrated example, the controlling entity forwards (message 9-4) the consolidated capability, denoted by UE-c', to UE1. UE-1 uses the consolidated capability when requesting registration to the wireless network (message 9-6 to a base station gNB providing a serving cell). In the illustrated example, the request is accepted and message 9-7 contains a user identity (for example, UE-ID) to be used with the relay context. Below both an apparatus acting as the relay node and using the relay context (with the consolidated capability) and the relay context (with the consolidated capability) are denoted by UE-c. In the illustrated example, UE1 forwards (message 9-7') the content, or at least the user identity, to the controlling entity.

Further, the wireless network configures UE-c for radio resource measurements by sending (message 9-8) to UE1 a radio resource measurement configuration, which is distributed to other apparatuses (messages 9-8').

In the meantime there exists a sidelink (9-s1) between UE1 and UE3, and a sidelink (9-s2) between UE1 and UE2 and the wireless connection (9-w1) for data transmission via UE1, seen as UE-c by the wireless network (gNB).

The apparatuses, i.e. UE1, UE2, UE3, perform the measurements according to the configuration, as described above with Figures 5, 6 and 7, and in the illustrated example, send measurement reports from an apparatus to apparatus acting as a relay node (messages 9-9 to UE1 from UE2, UE3) and, in the illustrated example, to the controlling entity (messages 9-9'). It should be appreciated that in another implementation, measurement results may be sent only to the controlling entity which then forwards them, or a consolidated measurement report, to the apparatus acting as the relay node, i.e. to UE-c.

Measurement reports may also contain measurement results on sidelink quality between the apparatus and other apparatuses or between the apparatus and the apparatus acting as the relay node. For example (not illustrated in detail in Figure 9), the sidelink quality (sidelink efficiency or sidelink capacity) may be determined as follows:

- UE1 acting as the relay node may transmit (sidelink unicast or group cast) a reference signal to UE2 and/or UE3, i.e. at least to one other apparatus in the device group, which are monitoring the sidelink

- UE2 and/or UE3, i.e. the apparatuses acting as remote nodes who received the reference signal sent from UE1, estimate or derive, per an apparatus, corresponding SNR (signal-to-noise ratio) or SINR (signal-to-interference-and-noise ratio), for example by measuring the received reference signal

- UE2 and/or UE3, may estimate the spectral efficiency of the link, for example by using one of the following formulas:

$$C(n,m) = \log(1+SNR(n,m))$$

$$C(n,m) = \log(1+SINR\ (n,m)),$$

wherein

$C(n,m)$= estimated spectral efficiency of a sidelink between UEn and UEm

SNR=estimated value of signal-to-noise ratio of the sidelink between UEn and UEm

SINR= estimated value of signal-to-interference-and-noise ratio of the sidelink between UEn and UEm

- UE2 and/or UE3 may transmit (sidelink unicast or group cast) a reference signal to UE1 and/or other apparatuses acting as relay node, i.e. one or more apparatuses acting as a remote node transmits a reference signal at least to one other apparatus, for example to the apparatus acting as the relay node, in the device group, and the receiving one or more apparatuses may perform the above described estimations.

Depending on an implementation measurement reports sent to UE1, i.e. to the apparatus acting as the relay node, may comprise estimated spectral efficiencies, or a result of a function of the estimated spectral efficiencies, for example a sum of the estimated spectral efficiencies. (The sum reflects the overall spectrum efficiency of the apparatus to communicate with other apparatuses in the device group.) Assuming that all apparatuses transmit a reference signal, a measurement report from UE2 may contain both C(2,1) and C(2,3), or their sum, for example. Naturally the measurement report may contain directly SNR/SINR or their sum, for example.

The measurement reports (messages 9-9, 9-9') may contain both radio channel qualities and sidelink qualities, or the qualities may be sent in separate messages.

In the illustrated example, the controlling entity evaluates in block 9-10 the received measurement reports to determine the best apparatus for acting as the relay node, for example the apparatus reporting the best radio channel quality, such as the highest reference signal received power, in the serving cell. Any other criteria, for example those described above with block 303 may be used. In the illustrated example it is assumed that UE1 is still the best apparatus, and UE1 is informed (message 9-11) correspondingly. It should be appreciated that sending message 9-11 may be omitted in the example, since there was no change to the selection made in block 9-3.

As described above with Figures 5 to 7, the apparatuses perform radio resource measurements, and possibly sidelink measurements, and reports them (illustrated with second set of messages 9-9, 9-9') according to the received configuration. In the illustrated example, the apparatus acting as the relay node determines (block 9-12) consolidated measurement reports (seeing by gNB as measurement reports from UE-c), for example as described above with Figures 5, and sends to the serving wireless network consolidated measurements reports (message 9-13). As can be seen from the example, the apparatuses may be configured to perform radio resource measurements and to report them within the device group at a different interval than the consolidated measurement reports are sent. It should be appreciated that in another implementation, in which the controlling entity is a separate physical entity, the controlling entity may determine consolidated measurement reports and send them to the apparatus acting as the relay node to be forwarded to the wireless network.

In the illustrated example, after some time the controlling entity determines (block 9-14), during evaluation, that the criteria for a role switch has been fulfilled, and that the best apparatus for acting as the relay node, i.e. to be UE-c, is UE2. The information is forwarded in message 9-15 to UE1, which detects in block 9-16 that a role switch is to take place and forwards (message 9-17) the relay context in use to UE2. It should be appreciated that the role switch may take place even at a first time the measurement reports are evaluated.

UE2 detects the role switch and starts in block 9-18 to act as the relay node (seen by the wireless network as UE-c), using the received relay context UE-c, the result being that the wireless network continues to have the wireless connection with UE-c, even though within the device group the end point of the wireless connection (9-w1') is now in UE2. This may be called as intra-gNB autonomous role switching. Further, sidelinks for transmission to/from remote nodes to/from the relay node are now to UE2, not to UE1. In other words, from UE3 there is a sidelink (9-s1') to UE2, and the sidelink (9-s2) between UE1 and UE2 is now used to relay content to/from UE1 via UE2.

Figure 10 illustrates information exchange in a situation prior to block 9-14 in the example of Figure 9, i.e. a situation in which UE1 is acting as the relay node.

Referring to Figure 10, the apparatuses perform radio resource measurements, and possibly sidelink measurements, and reports them (messages 9-9, 9-9') according to the received configuration or as requested (messages 10-0) by UE1, and the apparatus acting as the relay node determines and sends to the serving wireless network consolidated measurements reports (block 9-12, message 9-13) according to the received configuration.

The controlling entity determines (block 10-1), during evaluation of the measurement reports, that certain criteria has been fulfilled, the fulfilment indicating that a handover to another serving cell is most likely to happen. Fulfilment of the criteria is denoted herein as event A3. In the illustrated example, when comparing measured reference signal received power by UE2 from a neighbouring access node (depicted by a base station t-gNB in Figure 10) to measured reference signal received power by UE1 from the serving access node depicted by a base station s-gNB in Figure 10), it is detected in block 10-1 that the measured reference signal received power by UE2 is higher, the difference being more than a threshold, and therefore event A3 is detected in block 10-1, and at least information that the measurement report resulting to detecting the event A3 is received from UE2 is stored (at least temporarily). For example, the information may be stored as "expect to receive handover command from network in UE2". The threshold may be received in the measurement configurations, for example as one factor triggering reporting to the wireless network.

In the illustrated example the base station s-gNB in the serving cell decides in block 10-2 to initiate a handover (HO) of UE-c to the target cell, and sends a handover request (message 10-3) to the base station t-gNB in the target cell, which performs admission control to UE-c (block 10-4) and acknowledges (message 10-5) the handover to the base station s-gNB with corresponding configuration. Then a handover command (message 10-6) is sent from the base station s-gNB to UE-c, which still is UE1. The handover command may be sent in a "radio resource control connection reconfiguration" message.

In the illustrated example, UE1 forwards (message 10-6') the handover command to the controlling entity, which maps in block 10-7 the handover command using the information stored in block 10-1, the mapping resulting in the illustrated example to UE2. The controlling entity detects a role switch and sends (message 10-8) information that the handover command is for UE2 to UE1.

In response to the information in message 10-8, UE1 determines in block 10-9 that a role switch from the relay node to remote node is to take place, and forwards (message 10-10) the handover command with the relay context to UE2.

UE2 detects the role switch and the handover command and starts in block 10-10 the handover (messages 10-12) to the target base station t-gNB, UE2 acting as the relay node and being seen as UE-c in the wireless network, since UE2 is using the received relay context UE-c and handover configuration, the result being that the wireless network continues to have, albeit from different base station, the wireless connection with UE-c, even though within the device group the end point of the wireless connection (10-w2) is now in UE2. This may be called as inter-gNB autonomous role switching. Further, sidelinks (9-s1', 9-s2) for transmission to/from remote nodes are now to UE2, not to UE1, as described above with Figure 9.

As can be seen from the example illustrated in Figure 10, the role switch within the device group and the handover take place almost simultaneously, thereby minimizing a possible service interruption time.

Naturally it is possible that a handover may happen without a role switch, for example trigger A3 event is detected based on measurements by UE1.

Figure 11 illustrates basic principles of sidelink relaying, with the device group comprising apparatuses UE1, UE2, and UE3, UE1 acting as the relay node.

Referring to Figure 11, UE2 and UE3 transmit, using sidelink communication, sidelink information messages, for example SUI (sidelink user equipment information) messages, assistance information messages, for example UAI (user equipment assistance information) messages, and resource request, for example buffer status reports to UE, the different messages being depicted in Figure 11 by messages 11-1, 11-1'.

UE1 collects in block 11-2 the received messages and processes them in block 11-2 to generate a single request comprising sidelink information, assistance information and resource request, that is sent in message 11-3 to the wireless network for requesting sidelink resources. Request from different apparatuses may be differentiated in UE1 by using different packet data unit (PDU) sessions.

Message 11-3 requesting sidelink resources may be seen by the wireless network, in the illustrated example the base station gNB providing the serving cell, as a resource request to UE-c, wherein request from different apparatuses may be differentiated on data resource block level, for example. The base station assigns sidelink resources in block 11-4 to UE-c. The assigned resources are sent from gNB to UE-c (which is UE1) in a response (message 11-5).

UE1 informs (block 11-6) UE2 and UE3 on the assigned resources by sending message 11-7, 11-7'.

The above information exchange may be limited only to out-of-coverage apparatuses and apparatuses that can camp on the same cell as the apparatus acting as the relay node. In such solutions, apparatuses that cannot camp on the cell the apparatus acting as the relay node is currently camped on, may use for example mode 2 on obtained sidelink resources from other cells they can camp on.

As can be seen from the above examples, a role switch performed within a device group is transparent to the wireless network, thereby reducing signaling overhead. For example, the wireless network does not need to re-send the radio resource measurement configuration when the roles are switched, and the apparatus starting to act as the relay node does not need to send capability information, since the information is not based on the relay node itself but it is the consolidated capability information. In a network-controlled role switch between UE1 (current relay node, switching to remote node) to UE2 (current remote node, switching to relay node) following happens: sidelink between UE1 and UE2 is released, UE2 sets up a new wireless connection to the wireless network, a new sidelink relay discovery and setup procedure between UE1 and UE2 is performed, after which UE2 can relay traffic to and from UE1 (and UE1 can release the wireless connection to the wireless network, unless it already has been dropped). This creates significant signalling overhead compared to the above described examples in which autonomous role switching within the device group takes place.

The blocks, related functions, and information exchanges described above by means of Figures 2 to 11 are in no absolute chronological order, and some of them may be performed simultaneously or in an order differing from the given one. Other functions can also be executed between them or within them, and other information may be transmitted, and/or other rules applied. Some of the blocks or part of the blocks or one or more pieces of information can also be left out or replaced by a corresponding block or part of the block or one or more pieces of information.

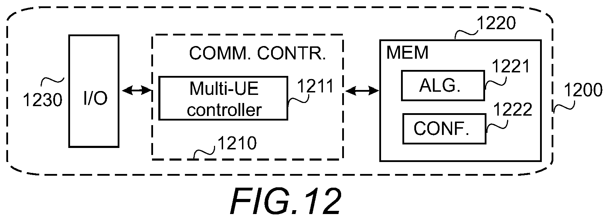

Figure 12 illustrates an apparatus comprising a communication controller 1210 such as at least one processor or processing circuitry, and at least one memory 1220 including a computer program code (software, algorithm) ALG. 1221, wherein the at least one memory and the computer program code (software, algorithm) are configured, with the at least one processor, to cause the apparatus to carry out any one of the embodiments, examples and implementations described above. The apparatus of Figure 12 may be an electronic device.

Referring to Figure 12, the memory 1220 may be implemented using any suitable data storage technology, such as semiconductor based memory devices, flash memory, magnetic memory devices and systems, optical memory devices and systems, fixed memory and removable memory. The memory may comprise a configuration storage CONF. 1221, such as a configuration database, for at least storing the relay context when acting as the relay node. The memory 1220 may further store measurement reports, and/or the consolidated capability, and/or a data buffer for data waiting for transmission and/or data waiting to be decoded.

Referring to Figure 12, the apparatus 1200 may further comprise a communication interface 1230 comprising hardware and/or software for realizing communication connectivity at least according to one or more radio communication protocols. The communication interface 1230 may provide the apparatus with radio communication capabilities with one or more base stations (access nodes) of a wireless network, or with radio communication capabilities with one or more apparatuses over sidelink(s). The communication interface may comprise standard well-known analog radio components such as an amplifier, filter, frequency-converter and circuitries, conversion circuitries transforming signals between analog and digital domains, and one or more antennas. Digital signal processing regarding transmission and/or reception of signals may be performed in a communication controller 1210.

The apparatus 1200 may further comprise an application processor (not illustrated in Figure 12) executing one or more computer program applications that generate a need to transmit and/or receive data. The application processor may execute computer programs forming the primary function of the apparatus. For example, if the apparatus is a sensor device, the application processor may execute one or more signal processing applications processing measurement data acquired from one or more sensor heads. If the apparatus is a computer system of a vehicle, the application processor may execute a media application and/or an autonomous driving and navigation application. In an embodiment, at least some of the functionalities of the apparatus of Figure 12 may be shared between two physically separate devices, forming one operational entity. Therefore, the apparatus may be seen to depict the operational entity comprising one or more physically separate devices for executing at least some of the processes described above.

The communication controller 1210 may comprise a controlling entity unit (Multi-UE-controller) 1211 configured to perform role switch related functionality and/or consolidated measurement reporting and/or consolidated capability determining/reporting according to any one of the embodiments/examples/implementations described above. In an embodiment, the controlling entity 1211 is configured to perform the controlling entity functionality according to any one of the embodiments/examples/implementations described above with Figures 9 and 10.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying soft-ware and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described in connection with Figures 2 to 11 may be carried out by an apparatus comprising corresponding means for carrying out at least some of the described processes. The apparatus may comprise separate means for separate phases of a process, or means may perform several phases or the whole process. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments/examples/implementations described herein.

According to yet another embodiment, the apparatus carrying out the embodiments comprises a circuitry including at least one processor and at least one memory including computer program code. When activated, the circuitry causes the apparatus to perform (carry out) at least some of the functionalities according to any one of the embodiments/examples/implementations of Figures 2 to 11, or operations thereof.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems (apparatuses) described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments/examples/implementations as described may also be carried out in the form of a computer process defined by a computer program or portions thereof. Embodiments of the methods described in connection with Figures 2 to 7 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium, for example. Coding of software for carrying out the embodiments as shown and described is well within the scope of a person of ordinary skill in the art. In an embodiment, a computer-readable medium comprises said computer program.

Even though the invention has been described above with reference to examples according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus (1200) comprising:

    means for establishing (300) to a serving wireless network a wireless connection with a relay context for the apparatus to act (301) as a relay node to relay data between the serving wireless network and one or more second apparatuses using sidelink communication between the apparatus and the one or more second apparatuses, wherein the one or more second apparatuses using sidelink are acting as one or more remote nodes and the relay context comprises an identity assigned by the serving wireless network to the apparatus;
    means for determining (303), in response to preset criteria being fulfilled (302), that a role switch between the apparatus and a second apparatus amongst the one or more remote nodes is to take place;
    means for sending (304), in response to the means for determining (303) determining that the role switch is to take place, over a sidelink to the second apparatus a first message comprising at least the relay context with said identity for the second apparatus to start to act as the relay node;
    means for stopping (305), in response to the means for sending (304) sending said first message to the second apparatus, to act as the relay node, and for starting to act (306) as a remote node, and for using the sidelink communication to the second apparatus for data transmission between the apparatus and the serving wireless network.

2. The apparatus (1200) according to claim 1, further configured to:

    determine (401), prior to establishing the relay context, a consolidated capability information based on capability information of the apparatus and capability information of at least the second apparatus; and
    use (402) the consolidated capability information as the capability information of the apparatus when establishing the wireless connection with the relay context.

3. An apparatus (1200) comprising:

    means for acting (800) as a remote node by using sidelink communication to a first apparatus for data transmissions between the apparatus and a serving wireless network, wherein the first apparatus acts as a relay node;
    means for determining (802), in response to receiving (801) from the first apparatus a first message comprising at least a relay context used by the first apparatus for data transmission over a wireless connection to the serving wireless network, that a role switch between the apparatus and the first apparatus is to take place, the relay context comprising an identity assigned by the serving wireless network to the first apparatus;
    means for stopping (803), in response to the means for determining (802) determining that the role switch between the apparatus and the first apparatus is to take place, to act as the remote node, and for starting to act (804) as a relay node using the received relay context with said identity to the serving wireless network for data transmission and for relaying data between one or more remote nodes and the serving wireless network using the sidelink communication, wherein the one or more remote nodes comprise at least the first apparatus.

4. The apparatus (1200) according to claim 3 further configured to act as the remote node, and:

    perform (702) radio resource measurements according to a received configuration; and
    send (703) measurement reports to the first apparatus.

5. The apparatus (1200) according to claim 3 or 4, further configured to act as the relay node, and:

    determine (303), in response to preset criteria being fulfilled, that a role switch between the apparatus and a second apparatus amongst the one or more remote nodes is to take place;
    send (304), in response to the determining that the role switch between the apparatus and the second apparatus is to take place, over a sidelink to the second apparatus at least the relay context received in the first message, the relay context being used with said identity by the apparatus and the first apparatus, for the second apparatus to start to act as the relay node; and
    stop (305), in response to the sending to the second apparatus at least the relay context for the second apparatus to start to act as the relay node, acting as the relay node and start acting (306) as a remote node and use the sidelink communication to the second apparatus for data transmission between the apparatus and the serving wireless network.

6. The apparatus (1200) according to any preceding claim, further configured to act as the relay node, and:

receive (601) from the serving wireless network a radio resource measurement configuration; and
send (602) the radio resource measurement configuration to the one or more remote nodes.

7. The apparatus (1200) according to claim 6, further configured to act as the relay node, and:

perform (501) radio resource measurements according to the received configuration;
receive (502) measurements reports from the remote nodes;
determine (503) a consolidated measurement report using own radio resource measurement results and received measurement reports; and
send (504) the consolidated measurement report to the wireless network as a radio resource measurement report of the apparatus.

8. The apparatus (1200) according to claim 6 or 7, further configured to act as the relay node, and: request measurement reports from the one or more remote nodes.

9. The apparatus (1200) according to claim 1, 2, 5, 6, 7 or 8, wherein the preset criteria comprises one or more of the following:

radio channel quality between the second apparatus and a serving access node in the serving wireless network is better than channel quality between the apparatus and the serving access node;
quality of sidelink between the second apparatus and another one of the one or more second apparatuses is better than quality of sidelink between the apparatus and the another one of the one or more second apparatuses;
quality has been better for a predetermined time; or
handover to a target access node in the serving wireless network is triggered based on measurements from a second apparatus on the target access node.

10. The apparatus (1200) according to any preceding claim, further configured to act as the relay node, and perform one or more of the following:

processing (11-2) sidelink resource requests received by the apparatus from the one or more remote nodes to a resource request of the apparatus and sending (11-3) the resource request to the serving wireless network;
processing (11-2) sidelink information messages received by the apparatus from the one or more remote nodes to a sidelink information message of the apparatus and sending (11-3) the message to the serving wireless network; or
processing (11-2) assistance information messages received by the apparatus from the remote nodes to an assistance information message of the apparatus and sending (11-3) the message to the serving wireless network.

11. The apparatus (1200) according to any preceding claim, further configured to:
send, in response to receiving from an enquiring apparatus over the sidelink a message enquiring capabilities, capability information at least to the enquiring apparatus.

12. A system comprising:

at least a serving wireless network (200);
at least one device group (201) comprising at least a first apparatus (201a) and a second apparatus (201b) that are capable to communicate over a wireless connection (220) with a serving wireless network and over sidelinks (210) with each other and configured to act as a relay node and as a remote node, wherein per a device group, one of the apparatuses acts as a relay node for the device group and other apparatuses act as remote nodes, the apparatuses comprising, per an apparatus at least one processor; and at least one memory storing instructions that, when executed by the at least one processor, cause the apparatus to:
act (301) as the relay node, and:

use a relay context to communicate with the serving wireless network as a context apparatus with which the relay context has been established, the relay context comprising an identity assigned by the wireless network to the context apparatus;
determine (303), as the context apparatus, in response to preset criteria being fulfilled, that a role switch between the relay node and one of the remote nodes is to take place;
forward, (304) in response to the determining as the context apparatus, that a role switch between the relay node and one of the remote nodes is to take place, over a sidelink at least the relay context with said identity to the one of the remote nodes and start to acting (306) as a remote node; or

act (800) as the remote node, and:

> use a sidelink and the relay node for data transmission to and from the serving wireless network;
> determine (802), in response to receiving at least the relay context with said identity from the relay node over the sidelink, that a role switch from the remote node to relay node is to take place;
> act (804), in response to the determining that a role switch from the remote node to relay node is to take place, as the relay node using the received relay context with said identity to communicate with the serving wireless network as the context apparatus;
> wherein the serving wireless network is configured to communicate with the context apparatus using the relay context with said identity assigned by the serving wireless network.

13. A method comprising:

> establishing (300), by an apparatus, to a serving wireless network a wireless connection with a relay context for the apparatus to act (301) as a relay node to relay data between the serving wireless network and one or more second apparatuses using sidelink communication between the apparatus and the one or more second apparatuses, wherein the one or more second apparatuses using sidelink are acting as one or more remote nodes and the relay context comprises an identity assigned by the serving wireless network to the apparatus;
> determining (303), by the apparatus, in response to preset criteria being fulfilled (302), that a role switch between the apparatus and a second apparatus amongst the one or more remote nodes is to take place;
> sending (304), by the apparatus, in response to the apparatus determining that a role switch is to take place, over a sidelink to the second apparatus a first message comprising at least the relay context with said identity for the second apparatus to start to act as the relay node;
> stopping (305), by the apparatus, in response to the sending of said first message, to act as the relay node and starting to act (306) as a remote node and to use the sidelink communication to the second apparatus for data transmission between the apparatus and the serving wireless network.

14. A method comprising:

acting (800), by an apparatus, as a remote node by using sidelink communication to a first apparatus for data transmissions between the apparatus and a serving wireless network, wherein the first apparatus is acting as a relay node;
determining (802), by the apparatus, in response to receiving (801) from the first apparatus a first message comprising at least a relay context used by the first apparatus for data transmission over a wireless connection to the serving wireless network, that a role switch between the apparatus and the first apparatus is to take place, wherein the relay context comprises an identity assigned by the serving wireless network to the first apparatus;
stopping (803), by the apparatus, in response to the determining that a role switch between the apparatus and the first apparatus is to take place, to act as the remote node and starting to act (804) as a relay node using the received relay context with said identity to the serving wireless network for data transmission and to relay data between one or more remote nodes and the serving wireless network using the sidelink communication, wherein the one or more remote nodes comprise at least the first apparatus.

15. A computer program comprising instructions which, when the program is executed by an apparatus, cause the apparatus to carry out at least one of a first process or a second process, wherein the first process comprises at least:

> acting (301) as a relay node to relay data between a serving wireless network and one or more second apparatuses using sidelink communication between the apparatus and the one or more second apparatuses, wherein the one or more second apparatuses using sidelink act as one or more remote nodes;
> using a relay context to communicate with the serving wireless network, the relay context comprising an identity assigned by the serving wireless network to an apparatus with which the relay context has been established;
> determining (303), in response to preset criteria being fulfilled, that a role switch between the relay node and one of the remote nodes is to take place;
> forwarding (304), in response to the determining that a role switch between the relay node and one of the remote nodes is to take place, over a sidelink at least the relay context with said identity to the one of the remote nodes and starting to act (306) as a remote node;
> wherein the second process comprises at least:

acting (800) as a remote node by using sidelink communication to a first apparatus for data transmissions between the apparatus and the serving wireless network, wherein the first apparatus acts as a relay node;

determining (802), in response to receiving from the first apparatus over a sidelink, a first message comprising at least the relay context with said identity, that a role switch between the apparatus and the first apparatus is to take place;

stopping (803), in response to the determining that a role switch between the apparatus and the first apparatus is to take place, to act as the remote node and to start acting (804) as a relay node using the received relay context with said identity to the serving wireless network.

**Patentansprüche**

1. Einrichtung (1200), die Folgendes umfasst:

Mittel zum Aufbauen (300) einer drahtlosen Verbindung mit einem Relaiskontext zu einem bedienenden drahtlosen Netzwerk, damit die Einrichtung als ein Relaisknoten fungiert (301), um Daten zwischen dem bedienenden drahtlosen Netzwerk und einer oder mehreren zweiten Einrichtungen, die eine Sidelinkkommunikation zwischen der Einrichtung und der einen oder den mehreren zweiten Einrichtungen verwenden, weiterzugeben, wobei die eine oder die mehreren zweiten Einrichtungen, die Sidelink verwenden, als ein oder mehrere entfernte Knoten fungieren und der Relaiskontext eine Identität umfasst, die der Einrichtung vom bedienenden drahtlosen Netzwerk zugewiesen ist;

Mittel zum Bestimmen (303), dass zwischen der Einrichtung und einer zweiten Einrichtung des einen oder der mehreren entfernten Knoten eine Rollenumschaltung erfolgen soll, in Reaktion darauf, dass voreingestellte Kriterien erfüllt (302) sind;

Mittel zum Senden (304) einer ersten Nachricht, die mindestens den Relaiskontext mit der Identität umfasst, über einen Sidelink, damit die zweite Einrichtung beginnen kann, als der Relaisknoten zu fungieren, in Reaktion darauf, dass die Mittel zum Bestimmen (303) bestimmen, dass die Rollenumschaltung erfolgen soll;

Mittel zum Beenden (305) des Fungierens als der Relaisknoten und zum Beginnen des Fungierens (306) als ein entfernter Knoten und zum Verwenden der Sidelinkkommunikation mit der zweiten Einrichtung für eine Datenübertragung zwischen der Einrichtung und dem bedienenden drahtlosen Netzwerk in Reaktion darauf, dass die Mittel zum Senden (304) die erste Nachricht an die zweite Einrichtung senden.

2. Einrichtung (1200) nach Anspruch 1, der ferner zu Folgendem ausgelegt ist:

Bestimmen (401) von konsolidierten Fähigkeitsinformationen auf Basis von Fähigkeitsinformationen der Einrichtung und Fähigkeitsinformationen mindestens der zweiten Einrichtung vor dem Aufbauen des Relaiskontextes; und Verwenden (402) der konsolidierten Fähigkeitsinformationen als die Fähigkeitsinformationen der Einrichtung, wenn die drahtlose Verbindung mit dem Relaiskontext aufgebaut wird.

3. Einrichtung (1200), die Folgendes umfasst:

Mittel zum Fungieren (800) als ein entfernter Knoten unter Verwendung einer Sidelinkkommunikation mit der ersten Einrichtung für Datenübertragungen zwischen der Einrichtung und einem bedienenden drahtlosen Netzwerk, wobei die erste Einrichtung als ein Relaisknoten fungiert;

Mittel zum Bestimmen (802), dass zwischen der Einrichtung und der ersten Einrichtung eine Rollenumschaltung erfolgen soll, in Reaktion auf das Empfangen (801) einer ersten Nachricht, die mindestens einen Relaiskontext umfasst, der von der ersten Einrichtung für eine Datenübertragung über eine drahtlose Verbindung mit dem bedienenden drahtlosen Netzwerk verwendet wird, von der ersten Einrichtung, wobei der Relaiskontext eine Identität umfasst, die der ersten Einrichtung vom bedienenden drahtlosen Netzwerk zugewiesen ist;

Mittel zum Beenden (803) des Fungierens als der entfernte Knoten und zum Beginnen des Fungierens (804) als ein Relaisknoten unter Verwendung des empfangenen Relaiskontextes mit der Identität zum bedienenden drahtlosen Netzwerk für eine Datenübertragung und zum Weitergeben von Daten zwischen einem oder mehreren entfernten Knoten und dem bedienenden drahtlosen Netzwerk unter Verwendung der Sidelinkkommunikation in Reaktion darauf, dass die Mittel zum Bestimmen (802) bestimmen, dass die Rollenumschaltung zwischen der Einrichtung und der ersten Einrichtung erfolgen soll, wobei der eine oder die mehreren entfernten Knoten mindestens die erste Einrichtung umfassen.

4. Einrichtung (1200) nach Anspruch 3, die ferner zum Fungieren als der entfernte Knoten ausgelegt ist, und:

zum Durchführen (702) von Funkressourcenmessungen gemäß einer empfangenen Auslegung; und
zum Senden (703) von Messberichten an die erste Einrichtung.

5. Einrichtung (1200) nach Anspruch 3 oder 4, die ferner zum Fungieren als der Relaisknoten ausgelegt ist, und:

zum Bestimmen (303), dass zwischen der Einrichtung und einer zweiten Einrichtung des einen oder der mehreren entfernten Knoten eine Rollenumschaltung erfolgen soll, in Reaktion darauf, dass voreingestellte Kriterien erfüllt sind;
zum Senden (304) mindestens des Relaiskontextes, der in der ersten Nachricht empfangen wurde, über einen Sidelink zur zweiten Einrichtung in Reaktion auf das Bestimmen, dass die Rollenumschaltung zwischen der Einrichtung und der zweiten Einrichtung erfolgen soll, wobei der Relaiskontext mit der Identität von der Einrichtung und der ersten Einrichtung verwendet wird, damit die zweite Einrichtung beginnt, als der Relaisknoten zu fungieren; und
zum Beenden (305) des Fungierens als der Relaisknoten und Beginnen des Fungierens (306) als ein entfernter Knoten und Verwenden der Sidelinkkommunikation mit der zweiten Einrichtung für eine Datenübertragung zwischen der Einrichtung und dem bedienenden drahtlosen Netzwerk in Reaktion auf das Senden mindestens des Relaiskontextes an die zweite Einrichtung, damit die zweite Einrichtung beginnt, als der Relaisknoten zu fungieren.

6. Einrichtung (1200) nach einem der vorhergehenden Ansprüche, die ferner zum Fungieren als der Relaisknoten ausgelegt ist, und:

zum Empfangen (601) einer Funkressourcenmessauslegung vom bedienenden drahtlosen Netzwerk; und
zum Senden (602) der Funkressourcenmessauslegung an den einen oder die mehreren entfernten Knoten.

7. Einrichtung (1200) nach Anspruch 6, die ferner zum Fungieren als der Relaisknoten ausgelegt ist, und:

zum Durchführen (501) von Funkressourcenmessungen gemäß der empfangenen Auslegung;
zum Empfangen (502) von Messberichten von den entfernten Knoten;

zum Bestimmen (503) eines konsolidierten Messberichts unter Verwendung von eigenen Funkressourcenmessergebnissen und empfangenen Messberichten; und
zum Senden (504) des konsolidierten Messberichts an das drahtlose Netzwerk als einen Funkressourcenmessbericht an die Einrichtung.

8. Einrichtung (1200) nach Anspruch 6 oder 7, die ferner zum Fungieren als der Relaisknoten ausgelegt ist, und:
zum Anfordern von Messberichten bei dem einen oder den mehreren entfernten Knoten.

9. Einrichtung (1200) nach Anspruch 1, 2, 5, 6, 7 oder 8, wobei die voreingestellten Kriterien eines oder mehreres von Folgendem umfassen:

eine Funkkanalqualität zwischen der zweiten Einrichtung und einem bedienenden Zugangsknoten im bedienenden drahtlosen Netzwerk ist besser als eine Kanalqualität zwischen der Einrichtung und dem bedienenden Zugangsknoten;
eine Qualität eines Sidelinks zwischen der zweiten Einrichtung und einer weiteren der einen oder der mehreren zweiten Einrichtungen ist besser als eine Qualität eines Sidelinks zwischen der Einrichtung und der weiteren der einen oder der mehreren zweiten Einrichtungen;
eine Qualität war für eine vorbestimmte Zeit besser; oder
auf Basis von Messungen einer zweiten Einrichtung am Zielzugangsknoten wird eine Übergabe an einen Zielzugangsknoten im bedienenden drahtlosen Netzwerk ausgelöst.

10. Einrichtung (1200) nach einem der vorhergehenden Ansprüche, die ferner zum Fungieren als der Relaisknoten und Durchführen von einem oder mehreren von Folgendem ausgelegt ist:

Verarbeiten (11-2) von Sidelinkressourcenanforderungen, die von der Einrichtung von dem einen oder den mehreren entfernten Knoten empfangen werden, zu einer Ressourcenanforderung der Einrichtung und Senden (11-3) der Ressourcenanforderung an das bedienende drahtlose Netzwerk;
Verarbeiten (11-2) von Sidelinkinformationsnachrichten, die von der Einrichtung von dem einen oder den mehreren entfernten Knoten empfangen werden, zu einer Sidelinkinformationsnachricht der Einrichtung und Senden (11-3) der Nachricht an das bedienende drahtlose Netzwerk; oder
Verarbeiten (11-2) von Unterstützungsinformationsnachrichten, die von der Einrichtung von den entfernten Knoten empfangen werden, zu einer Unterstützungsinformationsnachricht der Einrichtung und Senden (11-3) der Nachricht an das bedienende drahtlose Netzwerk.

11. Einrichtung (1200) nach einem der vorhergehenden Ansprüche, die ferner zu Folgendem ausgelegt ist: Senden von Fähigkeitsinformationen mindestens an eine anfragende Einrichtung in Reaktion auf das Empfangen einer Nachricht, die Fähigkeiten anfragt, von der anfragenden Einrichtung über den Sidelink.

12. System, das Folgendes umfasst:

mindestens ein bedienendes drahtloses Netzwerk (200);
mindestens eine Vorrichtungsgruppe (201), die mindestens eine erste Einrichtung (201a) und eine zweite Einrichtung (201b) umfasst, die in der Lage sind, über eine drahtlose Verbindung (220) mit einem bedienenden drahtlosen Netzwerk und über Sidelinks (210) miteinander zu kommunizieren, und dazu ausgelegt sind, als ein Relaisknoten und als ein entfernter Knoten zu fungieren, wobei pro Vorrichtungsgruppe eine der Einrichtungen als ein Relaisknoten für die Vorrichtungsgruppe fungiert und weitere Einrichtungen als entfernte Knoten fungieren, wobei die Einrichtungen pro einer Einrichtung mindestens einen Prozessor; und mindestens einen Speicher umfassen, in dem Anweisungen gespeichert sind, die, wenn sie von dem mindestens einen Prozessor ausgeführt werden, die Einrichtung zu Folgendem veranlassen:
Fungieren (301) als der Relaisknoten, und:

Verwenden eines Relaiskontextes, um mit dem bedienenden drahtlosen Netzwerk als einer Kontexteinrichtung, mit der der Relaiskontext aufgebaut wurde, zu kommunizieren, wobei der Relaiskontext eine Identität umfasst, die der Kontexteinrichtung vom drahtlosen Netzwerk zugewiesen ist;
Bestimmen (303) als die Kontexteinrichtung, dass zwischen dem Relaisknoten und einem der entfernten Knoten eine Rollenumschaltung erfolgen soll, in Reaktion darauf, dass voreingestellte Kriterien erfüllt sind;
Weiterleiten (304) mindestens des Relaiskontextes mit der Identität über einen Sidelink zu dem einen der entfernten Knoten in Reaktion auf das Bestimmen als die Kontexteinrichtung, dass zwischen dem Relaisknoten und einem der entfernten Knoten eine Rollenumschaltung erfolgen soll, und Beginnen des Fungierens (306) als ein ent-

ferner Knoten; oder
Fungieren (800) als der entfernte Knoten, und:

Verwenden eines Sidelinks und des Relaisknotens für eine Datenübertragung zum und vom bedienenden drahtlosen Netzwerk;
Bestimmen (802), dass eine Rollenumschaltung vom entfernten Knoten zu einem Relaisknoten erfolgen soll, in Reaktion auf das Empfangen mindestens des Relaiskontextes mit der Identität vom Relaisknoten über den Sidelink;
Fungieren (804) als der Relaisknoten unter Verwendung des empfangenen Relaiskontextes mit der Identität, um mit dem bedienenden drahtlosen Netzwerk als der Kontexteinrichtung zu kommunizieren, in Reaktion auf das Bestimmen, dass eine Rollenumschaltung vom entfernten Knoten zu einem Relaisknoten erfolgen soll;
wobei das bedienende drahtlose Netzwerk dazu ausgelegt ist, unter Verwendung des Relaiskontextes mit der Identität, die vom bedienenden Netzwerk zugewiesen ist, mit der Kontexteinrichtung zu kommunizieren.

13. Verfahren, das Folgendes umfasst:

Aufbauen (300) einer drahtlosen Verbindung mit einem Relaiskontext durch eine Einrichtung zu einem bedienenden drahtlosen Netzwerk, damit die Einrichtung als ein Relaisknoten fungiert (301), um Daten zwischen dem bedienenden drahtlosen Netzwerk und einer oder mehreren zweiten Einrichtungen, die eine Sidelinkkommunikation zwischen der Einrichtung und der einen oder der mehreren zweiten Einrichtungen verwenden, weiterzugeben, wobei die eine oder die mehreren zweiten Einrichtungen, die Sidelink verwenden, als ein oder mehrere entfernte Knoten fungieren und der Relaiskontext eine Identität umfasst, die der Einrichtung vom bedienenden drahtlosen Netzwerk zugewiesen ist;
Bestimmen (303) durch die Einrichtung, dass zwischen der Einrichtung und einer zweiten Einrichtung des einen oder der mehreren entfernten Knoten eine Rollenumschaltung erfolgen soll, in Reaktion darauf, dass voreingestellte Kriterien erfüllt (302) sind;
Senden (304) einer ersten Nachricht, die mindestens den Relaiskontext mit der Identität umfasst, durch die Einrichtung über einen Sidelink, damit die zweite Einrichtung beginnen kann, als der Relaisknoten zu fungieren, in Reaktion darauf, dass die Einrichtung bestimmt, dass eine Rollenumschaltung erfolgen soll;

Beenden (305) des Fungierens als der Relaisknoten und Beginnen des Fungierens (306) als ein entfernter Knoten und Verwenden der Sidelinkkommunikation mit der zweiten Einrichtung für eine Datenübertragung zwischen der Einrichtung und dem bedienenden drahtlosen Netzwerk durch die Einrichtung in Reaktion auf das Senden der ersten Nachricht.

14. Verfahren, das Folgendes umfasst:

Fungieren (800) als ein entfernter Knoten durch eine Einrichtung unter Verwendung einer Sidelinkkommunikation mit der ersten Einrichtung für Datenübertragungen zwischen der Einrichtung und einem bedienenden drahtlosen Netzwerk, wobei die erste Einrichtung als ein Relaisknoten fungiert;

Bestimmen (802) durch die Einrichtung, dass zwischen der Einrichtung und der ersten Einrichtung eine Rollenumschaltung erfolgen soll, in Reaktion auf das Empfangen (801) einer ersten Nachricht, die mindestens einen Relaiskontext umfasst, der von der ersten Einrichtung für eine Datenübertragung über eine drahtlose Verbindung mit dem bedienenden drahtlosen Netzwerk verwendet wird, von der ersten Einrichtung, wobei der Relaiskontext eine Identität umfasst, die der ersten Einrichtung vom bedienenden drahtlosen Netzwerk zugewiesen ist;

Beenden (803) des Fungierens als der entfernte Knoten und Beginnen des Fungierens (804) als ein Relaisknoten unter Verwendung des empfangenen Relaiskontextes mit der Identität zum bedienenden drahtlosen Netzwerk durch die Einrichtung für eine Datenübertragung und Weitergeben von Daten zwischen einem oder mehreren entfernten Knoten und dem bedienenden drahtlosen Netzwerk unter Verwendung der Sidelinkkommunikation in Reaktion auf das Bestimmen, dass eine Rollenumschaltung zwischen der Einrichtung und der ersten Einrichtung erfolgen soll, wobei der eine oder die mehreren entfernten Knoten mindestens die erste Einrichtung umfassen.

15. Computerprogramm, das Anweisungen umfasst, die, wenn das Programm von einer Einrichtung ausgeführt wird, die Einrichtung veranlassen, mindestens einen von einem ersten Prozess oder einem zweiten Prozess umzusetzen, wobei der erste Prozess mindestens Folgendes umfasst:

Fungieren (301) als ein Relaisknoten, um Daten zwischen einem bedienenden drahtlosen Netzwerk und einer oder mehreren zweiten Einrichtungen unter Verwendung einer Sidelinkkommunikation zwischen der Einrichtung und der einen oder den mehreren zweiten Einrichtungen weiterzugeben, wobei die eine oder die mehreren zweiten Einrichtungen, die Sidelink verwenden, als ein oder mehrere entfernte Knoten fungieren;

Verwenden eines Relaiskontextes, um mit dem bedienenden drahtlosen Netzwerk zu kommunizieren, wobei der Relaiskontext eine Identität umfasst, die vom bedienenden drahtlosen Netzwerk einer Einrichtung zugewiesen ist, mit der der Relaiskontext aufgebaut wurde;

Bestimmen (303), dass zwischen dem Relaisknoten und einem der entfernten Knoten eine Rollenumschaltung erfolgen soll, in Reaktion darauf, dass voreingestellte Kriterien erfüllt sind;

Weiterleiten (304) mindestens des Relaiskontextes mit der Identität über einen Sidelink zu dem einen der entfernten Knoten in Reaktion auf das Bestimmen, dass zwischen dem Relaisknoten und einem der entfernten Knoten eine Rollenumschaltung erfolgen soll, und Beginnen des Fungierens (306) als ein entfernter Knoten;

wobei der zweite Prozess mindestens Folgendes umfasst:

Fungieren (800) als ein entfernter Knoten unter Verwendung einer Sidelinkkommunikation mit der ersten Einrichtung für Datenübertragungen zwischen der Einrichtung und dem bedienenden drahtlosen Netzwerk, wobei die erste Einrichtung als ein Relaisknoten fungiert;

Bestimmen (802), dass zwischen der Einrichtung und der ersten Einrichtung eine Rollenumschaltung erfolgen soll, in Reaktion auf das Empfangen einer ersten Nachricht, die mindestens den Relaiskontext mit der Identität umfasst, von der ersten Einrichtung über einen Sidelink;

Beenden (803) des Fungierens als der entfernte Knoten und Beginnen des Fungierens (804) als ein Relaisknoten unter Verwendung des empfangenen Relaiskontextes mit der Identität zum bedienenden drahtlosen Netzwerk in Reaktion auf das Bestimmen, dass zwischen der Einrichtung und der ersten Einrichtung eine Rollenumschaltung erfolgen soll.

**Revendications**

1. Appareil (1200) comprenant :

des moyens pour établir (300) une connexion sans fil avec un réseau sans fil de desserte avec un contexte de relais pour que l'appareil agisse (301) comme un nœud de relais pour relayer des données entre le réseau sans fil de desserte et un ou plusieurs deuxièmes appareils utilisant une communication de liaison latérale entre l'appareil et les un ou plusieurs deuxièmes appareils, dans lequel les un ou plusieurs deuxièmes appareils utilisant une liaison latérale agissent comme un ou plusieurs nœuds distants, et le contexte de relais comprend une identité attribuée par le réseau sans fil de desserte à l'appareil ;

lorsque des critères prédéfinis sont remplis (302), des moyens pour déterminer (303) qu'un changement de rôle entre l'appareil et un deuxième appareil parmi les un ou plusieurs nœuds distants doit avoir lieu ;

lorsque les moyens de détermination (303) déterminent que le changement de rôle doit avoir lieu, des moyens pour envoyer (304) sur une liaison latérale, au deuxième appareil, un premier message comprenant au moins le contexte de relais avec ladite identité pour que le deuxième appareil commence à agir comme nœud de relais ;

lorsque les moyens d'envoi (304) envoient ledit premier message au deuxième appareil, des moyens pour arrêter (305) d'agir comme nœud de relais, pour commencer à agir (306) comme un nœud distant, et pour utiliser la communication de liaison latérale avec le deuxième appareil pour la transmission de données entre l'appareil et le réseau sans fil de desserte.

**2.** Appareil (1200) selon la revendication 1, configuré en outre pour :

avant d'établir le contexte de relais, déterminer (401) des informations de capacité consolidée sur la base d'informations de capacité de l'appareil et d'informations de capacité d'au moins le deuxième appareil ; et

utiliser (402) les informations de capacité consolidée comme informations de capacité de l'appareil lors de l'établissement de la connexion sans fil avec le contexte de relais.

**3.** Appareil (1200) comprenant :

des moyens pour agir (800) comme un nœud distant en utilisant une communication de liaison latérale avec un premier appareil pour des transmissions de données entre l'appareil et un réseau sans fil de desserte, dans lequel le premier appareil agit comme un nœud de relais ;

en réponse à la réception (801), du premier appareil, d'un premier message comprenant au moins un contexte de relais utilisé par le premier appareil pour la transmission de données au réseau sans fil de desserte sur une connexion sans fil, des moyens pour déterminer (802) qu'un changement de rôle entre l'appareil et le premier appareil doit avoir lieu, le contexte de relais comprenant une identité attribuée par le réseau sans fil de desserte au premier appareil ;

lorsque les moyens de détermination (802) déterminent que le changement de rôle entre l'appareil et le premier appareil doit avoir lieu, des moyens pour arrêter (803) d'agir comme nœud distant, pour commencer à agir (804) comme un nœud de relais en utilisant le contexte de relais reçu avec ladite identité sur le réseau sans fil de desserte pour la transmission de données, et pour relayer des données entre un ou plusieurs nœuds distants et le réseau sans fil de desserte en utilisant la communication de liaison latérale, dans lequel les un ou plusieurs nœuds distants comprennent au moins le premier appareil.

**4.** Appareil (1200) selon la revendication 3, configuré en outre pour agir comme nœud distant et :

effectuer (702) des mesures de ressources radio selon une configuration reçue ; et
envoyer (703) des rapports de mesure au premier appareil.

**5.** Appareil (1200) selon la revendication 3 ou 4, configuré en outre pour agir comme nœud de relais et :

lorsque des critères prédéfinis sont remplis, déterminer (303) qu'un changement de rôle entre l'appareil et un deuxième appareil parmi les un ou plusieurs nœuds distants doit avoir lieu ;

lorsqu'il est déterminé que le changement de rôle entre l'appareil et le deuxième appareil doit avoir lieu, envoyer (304) sur une liaison latérale, au deuxième appareil, au moins le contexte de relais reçu dans le premier message, le contexte de relais étant utilisé avec ladite identité par l'appareil et le premier appareil pour que le deuxième appareil commence à agir comme nœud de relais ; et

en réponse à l'envoi au deuxième appareil d'au moins le contexte de relais pour que le deuxième appareil commence à agir comme nœud de relais, arrêter (305) d'agir comme nœud de relais, commencer à agir (306) comme un nœud distant, et utiliser la communication de liaison latérale avec le deuxième appareil pour la transmission de données entre l'appareil et le réseau sans fil de desserte.

**6.** Appareil (1200) selon l'une des revendications précédentes, configuré en outre pour agir comme nœud de relais et :

   recevoir (601) du réseau sans fil de desserte une configuration de mesure de ressources radio ; et

   envoyer (602) la configuration de mesure de ressources radio aux un ou plusieurs nœuds distants.

**7.** Appareil (1200) selon la revendication 6, configuré en outre pour agir comme nœud de relais et :

   effectuer (501) des mesures de ressources radio selon la configuration reçue ;

   recevoir (502) des rapports de mesure des nœuds distants ;

   déterminer (503) un rapport de mesure consolidée en utilisant ses propres résultats de mesure de ressources radio et les rapports de mesure reçus ; et

   envoyer (504) le rapport de mesure consolidée au réseau sans fil en tant que rapport de mesure de ressources radio de l'appareil.

**8.** Appareil (1200) selon la revendication 6 ou 7, configuré en outre pour agir comme nœud de relais et :
demander des rapports de mesure aux un ou plusieurs nœuds distants.

**9.** Appareil (1200) selon la revendication 1, 2, 5, 6, 7 ou 8, dans lequel les critères prédéfinis comprennent un ou plusieurs des cas suivants :

   une qualité de canal radio entre le deuxième appareil et un nœud d'accès de desserte dans le réseau sans fil de desserte est meilleure qu'une qualité de canal entre l'appareil et le nœud d'accès de desserte ;

   une qualité de liaison latérale entre le deuxième appareil et un autre appareil des un ou plusieurs deuxièmes appareils est meilleure qu'une qualité de liaison latérale entre l'appareil et cet autre appareil des un ou plusieurs deuxièmes appareils ;

   une qualité a été meilleure pendant une période prédéterminée ; ou

   un transfert intercellulaire vers un nœud d'accès cible dans le réseau sans fil de desserte est déclenché sur la base de mesures provenant d'un deuxième appareil sur le nœud d'accès cible.

**10.** Appareil (1200) selon l'une des revendications précédentes, configuré en outre pour agir comme nœud de relais et effectuer une ou plusieurs des étapes suivantes :

   traiter (11-2) des demandes de ressources de liaison latérale, reçues par l'appareil en provenance des un ou plusieurs nœuds distants, en une demande de ressource de l'appareil, et envoyer (11-3) la demande de ressource au réseau sans fil de desserte ;
   traiter (11-2) des messages d'informations de liaison latérale, reçus par l'appareil en provenance des un ou plusieurs nœuds distants, en un message d'informations de liaison latérale de l'appareil, et envoyer (11-3) le message au réseau sans fil de desserte ; ou
   traiter (11-2) des messages d'informations d'assistance, reçus par l'appareil en provenance des nœuds distants, en un message d'informations d'assistance de l'appareil, et envoyer (11-3) le message au réseau sans fil de desserte.

**11.** Appareil (1200) selon l'une des revendications précédentes, configuré en outre pour :
en réponse à la réception sur la liaison latérale, d'un appareil demandeur, d'un message demandant les capacités, envoyer des informations de capacité au moins à l'appareil demandeur.

**12.** Système comprenant :

   au moins un réseau sans fil de desserte (200) ;
   au moins un groupe de dispositifs (201) comprenant au moins un premier appareil (201a) et un deuxième appareil (201b) qui sont en mesure de communiquer sur une connexion sans fil (220) avec un réseau sans fil de desserte et sur des liaisons latérales (210) entre eux, et qui sont configurés pour agir comme un nœud de relais et comme un nœud distant, dans lequel, par groupe de dispositifs, l'un des appareils agit comme un nœud de relais pour le groupe de dispositifs et les autres appareils agissent comme des nœuds distants, les appareils comprenant, par appareil, au moins un processeur et au moins une mémoire stockant des instructions qui, lorsqu'elles sont exécutées par l'au moins un processeur, amènent l'appareil à :
   agir (301) comme nœud de relais, et :

      utiliser un contexte de relais pour communiquer avec le réseau sans fil de desserte en tant qu'un appareil de contexte avec lequel le contexte de relais a été établi, le contexte de relais comprenant une identité attribuée par le réseau sans fil à l'appareil de contexte ;
      en tant qu'appareil de contexte, lorsque des critères prédéfinis sont remplis, déterminer (303) qu'un changement de rôle entre le nœud de relais et l'un des nœuds distants doit avoir lieu ;

lorsqu'il est déterminé, en tant qu'appareil de contexte, qu'un changement de rôle entre le nœud de relais et l'un des nœuds distants doit avoir lieu, transférer (304) sur une liaison latérale au moins le contexte de relais avec ladite identité à ce nœud des nœuds distants et commencer à agir (306) comme un nœud distant ; ou

agir (800) comme nœud distant et ;

utiliser une liaison latérale et le nœud de relais pour la transmission de données vers et depuis le réseau sans fil de desserte ;

en réponse à la réception sur la liaison latérale, du nœud de relais, d'au moins le contexte de relais avec ladite identité, déterminer (802) qu'un changement de rôle du nœud distant au nœud de relais doit avoir lieu ;

lorsqu'il est déterminé qu'un changement de rôle du nœud distant au nœud de relais doit avoir lieu, agir (804) comme nœud de relais en utilisant le contexte de relais reçu avec ladite identité pour communiquer avec le réseau sans fil de desserte en tant qu'appareil de contexte ;

dans lequel le réseau sans fil de desserte est configuré pour communiquer avec l'appareil de contexte en utilisant le contexte de relais avec ladite identité attribuée par le réseau sans fil de desserte.

13. Procédé comprenant les étapes suivantes :

établir (300), par un appareil, une connexion sans fil avec un réseau sans fil de desserte avec un contexte de relais pour que l'appareil agisse (301) comme un nœud de relais pour relayer des données entre le réseau sans fil de desserte et un ou plusieurs deuxièmes appareils utilisant une communication de liaison latérale entre l'appareil et les un ou plusieurs deuxièmes appareils, dans lequel les un ou plusieurs deuxièmes appareils utilisant une liaison latérale agissent comme un ou plusieurs nœuds distants, et le contexte de relais comprend une identité attribuée par le réseau sans fil de desserte à l'appareil ;

lorsque des critères prédéfinis sont remplis (302), déterminer (303) par l'appareil qu'un changement de rôle entre l'appareil et un deuxième appareil parmi les un ou plusieurs nœuds distants doit avoir lieu ;

lorsque l'appareil détermine qu'un changement de rôle doit avoir lieu, envoyer (304) sur une liaison latérale, par l'appareil au deuxième appareil, un premier message comprenant au moins le contexte de relais avec ladite identité pour que le deuxième appareil commence à agir comme nœud de relais ;

en réponse à l'envoi dudit premier message, arrêter (305), par l'appareil, d'agir comme nœud de relais, commencer à agir (306) comme un nœud distant, et utiliser la communication de liaison latérale avec le deuxième appareil pour la transmission de données entre l'appareil et le réseau sans fil de desserte.

14. Procédé comprenant les étapes suivantes :

agir (800), par un appareil, comme un nœud distant en utilisant une communication de liaison latérale avec un premier appareil pour des transmissions de données entre l'appareil et un réseau sans fil de desserte, dans lequel le premier appareil agit comme un nœud de relais ;

en réponse à la réception (801), du premier appareil, d'un premier message comprenant au moins un contexte de relais utilisé par le premier appareil pour la transmission de données au réseau sans fil de desserte sur une connexion sans fil, déterminer (802), par l'appareil, qu'un changement de rôle entre l'appareil et le premier appareil doit avoir lieu, dans lequel le contexte de relais comprend une identité attribuée par le réseau sans fil de desserte au premier appareil ;

lorsqu'il est déterminé qu'un changement de rôle entre l'appareil et le premier appareil doit avoir lieu, arrêter (803), par l'appareil, d'agir comme nœud distant, commencer à agir (804) comme un nœud de relais en utilisant le contexte de relais reçu avec ladite identité sur le réseau sans fil de desserte pour la transmission de données, et relayer des données entre un ou plusieurs nœuds distants et le réseau sans fil de desserte en utilisant la communication de liaison latérale, dans lequel les un ou plusieurs nœuds distants comprennent au moins le premier appareil.

15. Programme informatique comprenant des instructions qui, lorsque le programme est exécuté par un appareil, amènent l'appareil à effectuer au moins un parmi un premier processus ou un deuxième processus,

dans lequel le premier processus comprend au moins les étapes suivantes :

agir (301) comme un nœud de relais pour relayer des données entre un réseau sans fil de desserte et un ou plusieurs deuxièmes appareils utilisant une communication de liaison latérale entre l'appareil et les un ou plusieurs deuxièmes appareils, dans lequel les un ou plusieurs deuxièmes appareils utilisant une liaison latérale agissent comme un ou plusieurs nœuds distants ;

utiliser un contexte de relais pour communiquer avec le réseau sans fil de desserte, le contexte de relais comprenant une identité attribuée par le réseau sans fil de desserte à un appareil avec lequel le contexte de relais a été établi ;

lorsque des critères prédéfinis sont remplis, déterminer (303) qu'un changement de rôle entre le nœud de relais et l'un des nœuds distants doit avoir lieu ;

lorsqu'il est déterminé qu'un changement de rôle entre le nœud de relais et l'un des nœuds distants doit avoir lieu, transférer (304) sur une liaison latérale au moins le contexte de relais avec ladite identité à ce nœud des nœuds distants, et commencer à agir (306) comme nœud distant ;

dans lequel le deuxième processus comprend au moins les étapes suivantes :

agir (800) comme un nœud distant en utilisant une communication de liaison latérale avec un premier appareil pour des transmissions de données entre l'appareil et le réseau sans fil de desserte, dans lequel le premier appareil agit comme un nœud de relais ;

en réponse à la réception sur une liaison latérale, du premier appareil, d'un premier message comprenant au moins le contexte de relais avec ladite identité, déterminer (802) qu'un changement de rôle entre l'appareil et le premier appareil doit avoir lieu ;

lorsqu'il est déterminé qu'un changement de rôle entre l'appareil et le premier appareil doit avoir lieu, arrêter (803) d'agir comme nœud distant, et commencer à agir (804) comme un nœud de relais en utilisant le contexte de relais reçu avec ladite identité sur le réseau sans fil de desserte.

EP 4 037 428 B1

*FIG.1*

*FIG.2*

```
┌ ─ ─ ─ ─ ─ ─ ─ ─ ─ ─ ─ ─ ─ ─ ─ ─ ─ ─ ─ ─ ┐
│     establish a connection with relay context     │∿ 300
└ ─ ─ ─ ─ ─ ─ ─ ─ ─ ─ ─ ─ ─ ─ ─ ─ ─ ─ ─ ─ ┘
```

act as relay node for 2nd apparatus(es) ∿ 301

```
              ╱╲  ∿ 302
    no      ╱  criteria fulfilled?  ╲
◄───────────╲                      ╱
              ╲╱
              │ yes
```

determine role switch with 2nd apparatus ∿ 303

cause sending relay context to 2nd apparatus ∿ 304

stop acting as relay node ∿ 305

act as remote node using sidelink to 2nd apparatus ∿ 306

## FIG.3

determine consolidated capability ∿ 401

establish a connection with relay context
using consolidated capability ∿ 402

act as relay node for 2nd apparatus(es) ∿ 403

```
              ╱╲  ∿ 404
    no      ╱  criteria fulfilled?  ╲
◄───────────╲                      ╱
              ╲╱
              │ yes
```

determine role switch with 2nd apparatus ∿ 405

cause sending relay context to 2nd apparatus ∿ 406

stop acting as relay node ∿ 407

act as remote node using sidelink to 2nd apparatus ∿ 408

## FIG.4

```
┌─────────────────────────────────────────────┐
│           acting as a relay node             │  ~ 500
└─────────────────────────────────────────────┘
                      │
                      ▼
┌─────────────────────────────────────────────┐
│           perform RR measurements            │  ~ 501
└─────────────────────────────────────────────┘
                      │
                      ▼
┌─────────────────────────────────────────────┐
│          receive measurement reports         │  ~ 502
└─────────────────────────────────────────────┘
                      │
                      ▼
┌─────────────────────────────────────────────┐
│      determine consolidated measurement report │  ~ 503
└─────────────────────────────────────────────┘
                      │
                      ▼
┌─────────────────────────────────────────────┐
│    cause sending consolidated report to network │  ~ 504
└─────────────────────────────────────────────┘
```

## FIG.5

```
┌─────────────────────────────────────────────┐
│             acting as relay node             │  ~ 600
└─────────────────────────────────────────────┘
                      │
                      ▼
┌─────────────────────────────────────────────┐
│    receive from network RR measurement config. │  ~ 601
└─────────────────────────────────────────────┘
                      │
                      ▼
┌─────────────────────────────────────────────┐
│       cause sending RR measurement config.   │  ~ 602
│             to 2nd apparatus(es)             │
└─────────────────────────────────────────────┘
                      │
                      ▼
┌─────────────────────────────────────────────┐
│    perform RR measurement according to config. │  ~ 603
└─────────────────────────────────────────────┘
```

## FIG.6

```
┌─────────────────────────────────────────────┐
│            acting as remote node             │  ~ 700
└─────────────────────────────────────────────┘
                      │
                      ▼
┌─────────────────────────────────────────────┐
│    receive over sidelink RR measurement config. │  ~ 701
└─────────────────────────────────────────────┘
                      │
                      ▼
┌─────────────────────────────────────────────┐
│    perform RR measurement according to config. │  ~ 702
└─────────────────────────────────────────────┘
                      │
                      ▼
┌─────────────────────────────────────────────┐
│       cause sending RR measurement result(s) │  ~ 703
│        in measurement report over sidelink   │
└─────────────────────────────────────────────┘
```

## FIG.7

```
┌─────────────────────────────────────────────┐
│            acting as remote node             │  ~ 800
└─────────────────────────────────────────────┘
                      │
                      ▼
┌─────────────────────────────────────────────┐
│         receive relay context over sidelink  │  ~ 801
└─────────────────────────────────────────────┘
                      │
                      ▼
┌─────────────────────────────────────────────┐
│      determine role switch with 1st apparatus │  ~ 802
└─────────────────────────────────────────────┘
                      │
                      ▼
┌─────────────────────────────────────────────┐
│           stop acting as remote node         │  ~ 803
└─────────────────────────────────────────────┘
                      │
                      ▼
┌─────────────────────────────────────────────┐
│     act as relay node using received relay context │  ~ 804
└─────────────────────────────────────────────┘
```

## FIG.8

FIG.9

*FIG.10*

*FIG.11*

*FIG.12*

**EP 4 037 428 B1**

REFERENCES CITED IN THE DESCRIPTION

**Patent documents cited in the description**

- US 20150282142 A
- US 20190014616 A
- EP 3955642 A
- EP 4037428 A
- US 2015365994 A